# EUROPÄISCHE PATENTSCHRIFT

(11) **EP 1 356 957 B1**
(45) Veröffentlichungstag und Bekanntmachung des Hinweises auf die Patenterteilung: **25.08.2004**
(21) Anmeldenummer: 03009401.5
(22) Anmeldetag: 25.04.2003
(51) Int. Cl.: B60C 11/24, B60C 23/04

(54) **Auf einer Felge montierbarer Luftreifen, Sensornetz, Umdrehungsmesseinheit und Fahrzeugüberwachungssystem**
Tire mountable on a rim, sensor network, revolution sensing device and vehicle monitoring system
Pneu montable sur une jante, système de réseau à capteurs, dispositif pour mesurer la rotation et système de surveillance de véhicule

(30) Priorität: 26.04.2002 DE 10218781
(43) Veröffentlichungstag der Anmeldung: 29.10.2003
(73) Patentinhaber: TÜV Automotive GmbH Unternehmensgruppe TÜV Süddeutschland, 80339 München (DE)
(72) Erfinder: Schick, Bernhard, 76199 Karlsruhe (DE)
(74) Vertreter: Kramer - Barske - Schmidtchen

(56) Entgegenhaltungen:
- WO-A-02/20287
- DE-A- 19 745 734
- US-A- 5 573 610

## Beschreibung

Die Erfindung betrifft einen auf einer Felge montierbaren Luftreifen, der innenseitig eine Mehrzahl von zumindest im Bereich der Lauffläche angebrachten Sensoreinheiten zur Erfassung wenigstens eines Betriebsparameters aufweist. Ferner betrifft die Erfindung ein Fahrzeugüberwachungssystem.

Ein gattungsgemäßer Luftreifen ist aus der US-A-5 573 610 bekannt.

Die Reifen der Räder vermitteln den Kontakt zwischen der Fahrbahn und dem Fahrzeug. Den Reifen kommt somit vielfältige Bedeutung zu; sie beeinflussen den Abrollkomfort, den Fahrwiderstand, die Fahrsicherheit und vieles mehr und sind daher ein für die Funktionstüchtigkeit eines Fahrzeugs entscheidendes Bauteil. Reifen unterliegen im Betrieb erheblichen Belastungen. Neben den Umwelteinflüssen durch Gase, Licht und Flüssigkeiten sowie mechanischen Beanspruchungen wie Fahrzeugbeladung, Sturz- und Spureinstellung, die Lebensdauer und das Funktionsverhalten eines Reifens der Reifenfülldruck, d.h. der innerhalb des Reifens herrschende Luftdruck, von maßgeblicher Bedeutung. Insbesondere zu geringer Luftdruck führt zu übermäßiger Walkarbeit des Reifens, wodurch sich die Reifentemperatur insbesondere im Bereich der Reifenschulter erhöht. Eine hohe Temperatur schädigt nicht nur den Reifengummi selbst, sondern auch dessen Verbindung mit der Karkasse und weiteren Reifeneinlagen, beispielsweise einem Gürtel. Insgesamt ist wichtig, daß die reifenbedingte Verlustleistung, die sich neben mechanischer Beanspruchung auch in erhöhter Reifentemperatur zeigt, klein bleibt.

Der Erfindung liegt die Aufgabe zugrunde, eine Möglichkeit anzugeben, mit der die Funktionszuverlässigkeit eines auf einer Felge montierbaren Luftreifens erfasst werden kann.

Der Anspruch 1 kennzeichnet eine grundsätzliche Lösung dieser Aufgabe. Dadurch, daß in dem Reifen eine Mehrzahl von Sensoren angeordnet sind, können Betriebsparameter des Reifens, wie Temperatur, Druck, mechanische Beanspruchung usw. erfasst werden und stehen für eine Auswertung zur Verfügung, die nicht nur Schlüsse auf den Reifen selbst, sondern auch auf Betriebsparameter des Fahrzeugs zulassen.

Die Unteransprüche 2 bis 12 sind auf vorteilhafte Ausgestaltungen des Luftreifens gemäß dem Anspruch 1 gerichtet.

Anspruch 13 zeigt ein Fahrzeugüberwachungssystem, enthaltend einen Luftreifen nach einem der Ansprüche 1 bis 12.

Die Erfindung ist für auf eine Felge montierbare Luftreifen aller Arten von Fahrzeugen, auch von Flugzeugen, geeignet.

Die Erfindung wird im folgenden anhand schematischer Zeichnungen beispielsweise und mit weiteren Einzelheiten erläutert.

Es stellen dar:
- Fig. 1: einen Querschnitt durch die obere Hälfte eines Fahrzeugreifens sowie Teile eines Fahrzeugüberwachungssystems,
- Fig. 2: schematisch eine Möglichkeit, Daten vom Reifen auszulesen,
- Fig. 3 - 5: Aufsichten auf Teile eines abgewickelten Sensometzes.
- Fig. 6: schematisch einen Sensor,
- Fig. 7: schematisch eine autarke Sensoreinheit.

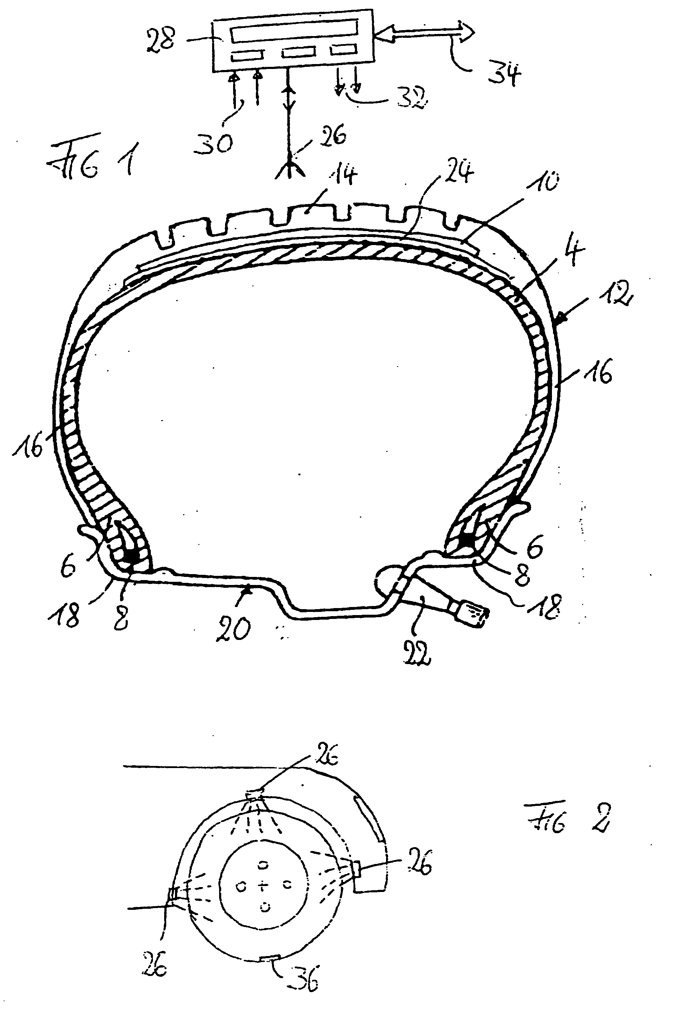

Fig. 1 zeigt einen Querschnitt durch einen Reifen in Radialbauweise, der eine Karkasse 4 aufweist, die beispielsweise aus zwei radial verlaufenden Lagen aus Rayon-Fäden zusammengesetzt ist und radial einwärts in Wülsten 6 endet. Zur Stabilisierung der Wülste 6 sind in deren radial innere Endbereiche Kerne 8 eingelagert. Auf dem radial äußeren Bereich der Karkasse 4 ist ein Gürtel 10 angeordnet, der beispielsweise aus zwei gekreuzten Lagen von Stahlfäden und zwei umlaufenden Lagen von Nylonfäden besteht. Über die Karkasse bzw. den Gürtel 10 ist eine Gummischicht 12 vulkanisiert, die im radial äußeren Bereich den Laufstreifen 14 bildet und im seitlichen Bereich verhältnismäßig dünne Seitenwände 16 bildet. Die Wülste 6 sind in Schultern 18 einer Felge 20 aufgenommen, die wiederum einteilig mit einer nicht dargestellten Radschüssel verbunden ist. Bei dem Reifen handelt es sich um eine luftdichte Konstruktion, so daß das Reifeninnere über ein in die Felge eingesetztes Ventil 22 mit Druckluft beaufschlagt werden kann.

Die beschriebene Reifenkonstruktion ist an sich bekannt und wird daher nicht weiter erläutert. Die Konstruktion ist nur beispielsweise. Die Erfindung kann auch für Reifen abgeänderter Bauart verwendet werden.

Zwischen dem Gürtel 10 und der Karkasse 4 ist ein Sensornetz 24 angeordnet, beispielsweise einlaminiert oder einvulkanisiert, das in Fig. 1 nicht dargestellte Sensoreinheiten enthält. Die Sensoreinheiten können im dargestellten Beispiel mittels einer fahrzeugfesten Antenne 26 ausgelesen werden, die an ein Steuergerät 28 angeschlossen ist, das weitere, mit Fahrzeugsensoren oder anderen Steuergeräten verbundene Eingänge 30, Ausgänge 32 und eine an ein Bussystem angeschlossene Datenleitung 34 aufweisen kann.

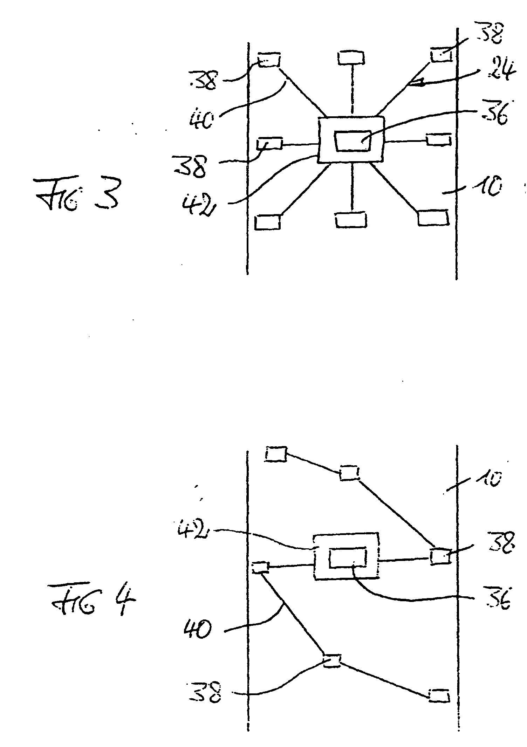

Fig. 2 zeigt schematisch drei in einem Kotflügel eines Fahrzeugs in Umfangsrichtung beabstandet angeordnete und erforderlichenfalls auch in Querrichtung des Fahrzeugs zueinander versetzte Antennen 26, die mit wenigstens einem im Sensornetz 24 enthaltenen oder mit einem an einen Knoten des Sensornetzes angeschlossenen Transponder 36 kommunizieren. Je nach Anordnung des oder der Transponder können mehr oder weniger fahrzeugfeste Antennen vorgesehen sein.

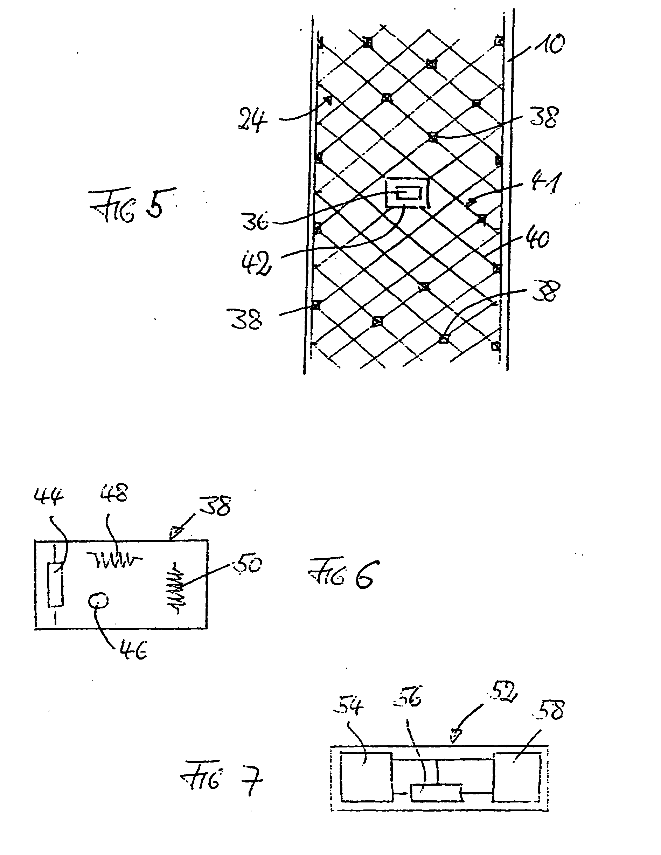

Die Figuren 3 bis 5 zeigen von der Reifeninnenseite her Aufsichten auf das Sensornetz 24 mit dem darunter befindlichen Gürtel 10.

Bei der Ausführungsform gemäß Fig. 3 sind in dem Sensornetz 24 enthaltene Sensoreinheiten 38 über je eine Leitung 40 mit einem Knoten 42 verbunden, der den Transponder 36 enthält.

Bei der Ausführungsform gemäß Fig. 4 sind jeweils mehrere, in Reihe hintereinander angeordnete Sensoren 38 über je eine gemeinsame Leitung 40 mit dem Transponder 36 verbunden.

Fig. 5 zeigt eine Ausführungsform, bei der die Leitungen 40 ein rautenförmiges Netz 41 bilden, das an den Knoten 42 mit dem Transponder 36 angeschlossen ist.

Die fadenartigen Leitungen 40 bestehen vorteilhafterweise aus Stahlseil, Carbon, Leitplastik und anderen, beispielsweise aus der Raumfahrt bekannten elektrischen Leitern, die zur notwendigen Isolierung und Zugentlastung mit weiteren Materialien oder Fasern kombiniert sind, beispielsweise Carbon, Aramid, Stahlseil-Kunststoff, Leitplastik-Keramikfaser usw., wobei die Verbundwerkstofffäden bzw. Leitungen chemikalien- und hitzebeständig sein müssen, um beim Vulkanisieren des Reifens nicht beschädigt zu werden, und mechanische Eigenschaften aufweisen müssen, die den Beanspruchungen im Betrieb des Reifens standhalten.

Je nach Datenverarbeitungstechnik ist jede Sensoreinheit 38 über eine oder mehrere elektrisch voneinander isolierte Leitungen mit dem zentralen Knoten 42 verbunden oder werden von den einzelnen Sensoreinheiten Leitungen gemeinsam benutzt, wenn die Sensoreinheiten beispielsweise über eigene Prozessoren verfügen und in Multiplex- bzw. Bustechnik einzeln vom Transponder 36 abgefragt werden können. Innerhalb des Leiter- bzw. Fadennetzes 41 können somit beispielsweise die Schaltungsanordnungen der Fig. 2 oder 3 realisiert werden.

Je nach gewünschter Anzahl der Sensoren bzw. Bestückung des Reifens mit Sensoreinheiten wird aus den notwendigen Leitern 40 ein Leiter- bzw. Fadennetz 41 hergestellt, das mit den Sensoreinheiten 38 bestückt das Sensornetz 24 bildet, das zwischen dem Gürtel 10 und der Karkasse 4 angeordnet und bei der Herstellung des Reifens einvulkanisiert wird. Die Breite des Sensornetzes 24, die in Figur 1 etwas größer als die der Karkasse 10 ist, kann je nach erwünschten Sensoreinheiten bis in die Seitenwände 16 hineinreichen oder den Gürtel 10 nicht vollständig überdecken. Ebenso muss sich das Sensornetz 24 nicht zwingend um den gesamten Umfang des Reifens (in dessen Laufrichtung gesehen) erstrecken. Die einzelnen Fäden des Netzes können mehradrig ausgeführt sein. Eine Masse für alle Sensoreinheiten 38 und den Transponder 36 kann durch die Stahllage des Gürtels 10 gebildet sein, mit der jede Sensoreinheit und dem Transponder 36 leitend verbunden werden. In der dargestellten Ausführungsform bildet der Knoten 42 beispielsweise ein Grundsubstrat mit Leiterbahnen zum Anschluss der Leiter 40 und der auf das Grundsubstrat aufgebrachten Elemente des Transponders, wie Prozessor, Speicher, Antenne und ggfs. Energieversorgung. Je nach Konstruktion können mechanisch stabile Fäden sich durch das ganze Substrat hindurcherstrecken oder mit Dehnelementen zur Kraftmessung verbunden sein, die in das Substrat integriert sind.

Die Sensoreinheiten 38 können je nach zu ermittelnden physikalischen Größen bzw. Betriebsparametern des Reifens unterschiedlichster Art sein. Die Sensoreinheiten 38 können mehrere Sensorelemente enthalten, beispielsweise eines zur Messung der Temperatur, eines zur Messung des Reifenluftdrucks, eines zur Messung des vom Gürtel her wirkenden Druckes sowie Dehnungsmesszellen zur Messung der von den Fäden her wirkenden Kräfte oder Dehnungen (Fig. 5), die ein Maß für die jeweils lokale Dehnung der Reifenstruktur sind.

Durch eine ausreichend feine Verteilung der Sensoreinheiten über die Reifenaufstandsfläche (Latschfläche) liegen die Informationen in einer Form vor, die eine Darstellung der jeweiligen gemessenen Größe über die jeweilige Fläche zulässt. Diese Darstellungen können, wie nachfolgend erläutert werden wird, in vielfältiger Weise genutzt werden.

Druckmessungen können beispielsweise mittels druckempfindlicher Folien oder Mikromesszellen mit Piezoelementen oder Kondensatoren erfolgen. Dehnungen der Reifenstruktur lassen sich mit dehnungsempfindlichen Folien oder Mikromesszellen (piezoelektrisch oder nach dem Kondensatorprinzip) messen. Die Temperaturverteilung kann in ähnlicher Weise piezoelektrisch, mittels Widerstandsmesselementen usw. erfolgen. Die Messprinzipien sind an sich bekannt und werden daher nicht erläutert.

Fig. 6 zeigt schematisch eine Sensoreinheit 38 mit einem Temperaturmesselement 44, einem Druckmesselement 46 und zwei senkrecht zueinander angeordneten Dehnmesselementen 48 und 50.

Für die Übertragung der von den Sensoreinheiten 38 erfassten Daten gibt es unterschiedlichste Möglichkeiten. Eine vorteilhafte Möglichkeit besteht darin, die Daten über den Transponder 36 zu übertragen, der dem Knoten 42 zugeordnet ist, mit dem die Sensoreinheiten 38 verbunden sind. Der Transponder 36 wird jeweils, wenn er sich an einer der Antennen 26 vorbeibewegt, induktiv mit Strom versorgt. Es versteht sich, dass der Transponder 36 dazu vorteilhafterweise nicht unmittelbar unter dem Gürtel 10, sondern seitlich neben dem Gürtel angeordnet ist, so dass er gegenüber der oder den Antennen 26 nicht abgeschirmt ist. Die Datenübertragung vom Transponder 36 über die Antenne bzw. Antennen 26 zum Steuergerät 28 kann online erfolgen, indem jeweils eine der Sensoreinheiten ausgelesen wird; in einem anderen Verfahren werden in einem vom Prozessor des Transponders gesteuerten Speicher die Daten der einzelnen Sensoreinheiten zyklisch eingelesen, zwischengespeichert und dann ausgelesen, beispielsweise nach einem Sample-Hold-Verfahren. Das Auslesen der Sensoreinheiten kann zeit- oder drehzahlgesteuert erfolgen. Transponder und die damit zusammenhängenden Übertragungstechniken sind an sich bekannt, so dass diese nicht im einzelnen erläutert werden.

Beispielsweise kann bei jeder Radumdrehung ein Temperaturwert, Druckwert, eine Dehnung usw. eines Sensors ausgelesen werden, so dass sich nach einer entsprechenden Anzahl von Umdrehungen ein vollständiges Bild des Reifens ergibt. Je nach verfügbarer Datenverarbeitungskapazität können mehrere, den einzelnen in ihrer Lage bekannten Sensoreinheiten zugeordnete Messwerte gleichzeitig ausgelesen werden, so daß sich ein vollständiges Bild (Footprint) des Reifens rasch ergibt. Dabei können wenig dynamische Größen, wie Temperaturen mit geringerer Folgefrequenz ausgelesen werden als sich rasch verändernde Größen, wie beispielsweise Druck- und Dehnungsverteilung. Es versteht sich, dass Temperatursensorelemete vor allem in dem Randbereich des Gürtels 10 in der Reifenschulter angeordnet sind, da dies diejenige Stelle des Reifens ist, an der bei geringem Luftdruck oder zu hohen Belastungen die höchsten Temperaturen auftreten, die den Reifen möglicherweise schädigen.

Das Auslesen der Daten über einen Transponder, der durch entsprechende elektronische Ausrüstung (Speicher, Prozessor) über Datenverarbeitungskapazität erfolgt, ist nicht zwingend. Die einzelnen Sensorelemente können beispielsweise Schwingkreise mit sensorspezifischen Resonanzfrequenzen aufweisen, so daß die Sensoren frequenzspezifisch unmittelbar ausgelesen werden können. Das Messsignal kann durch die Verstimmung der Resonanzfrequenz gegeben sein oder durch eine Modulation der Resonanzfrequenz. Bei dieser Art von Datenübertragung sind der zentrale Knoten 42 mit dem ihm zugeordneten zentralen Transponder 36 nicht erforderlich.

Das Faden- bzw. Leitungsnetz 41 ist nicht zwingend. Bei der zunehmenden Miniaturisierung von Transpondern, in die Sensorelemente integriert sind und die insgesamt biegbar bzw. flexibel sind, und den niedrigen Kosten ist es möglich, eine Vielzahl einzelner Sensoreinheiten mit integrierten Transpondern sowie ggfs. zusätzlicher eigener Energieversorgung im Reifen an zweckentsprechenden Stellen anzuordnen und berührungsfrei auszulesen. Solche biegsamen Kunststoff-Chips mit ausreichender Temperaturfestigkeit sind beispielsweise in dem Artikel von F. Miller "Polytronic: Chips von der Rolle", Fraunhofer Magazin 4, 2001, S. 8 - 12, beschrieben. Solche Chips können einzeln in den Reifen eingebracht werden, oder als vorgefertigte Baugruppe an einem Fadennetz angeordnet.

Die in der geschilderten Messtechnik gewonnenen Daten des infolge der in ihm verteilten Sensoreinheiten "intelligenten" Reifen lassen sich in vielfältiger Weise auswerten. Das Steuergerät weist dazu einen Mikroprozessor und Seichereinheiten auf, so daß der Betrieb einer in ihm enthaltenen Ausleseeinheit und Auswerteinheit gesteuert wird und Ergebnisse an einer Anzeigeneinheit angezeigt werden. Der Temperaturverlauf des Reifens kann gespeichert werden, wobei für die Lebensdauer bzw. Schädigung des Reifens entscheidend ist, wie lange an einer Stelle der Reifenschulter eine über einem Schwellwert liegende Temperatur vorhanden ist. Aus unzulässig hoher Temperatur kann auf unzureichenden Luftdruck im Reifen geschlossen werden. In Kombination mit der mechanischen Beanspruchung des Reifens, beispielsweise der Dehnung bzw. Verformung in der Ebene der Lauffläche kann auf falsche Sturz- und Spurwerte des Fahrzeugs geschlossen werden, so daß vom Steuergerät eine entsprechende Fehleranzeige erfolgt. Auch aus Unsymmetrie der Temperaturverteilung können Rückschlüsse auf fehlerhafte Fahrzeugzustände geschlossen werden, beispielsweise lokale heiße Anströmung durch eine defekte Abgasanlage, falsche Achseinstellungen usw.. Der Footprint der Dehn- und/oder Druckverteilung innerhalb der Reifenaufstandsfläche, (aus Reifenlatsch) erlaubt Aussagen über die übertragbaren Reibungskräfte (längs und quer), die Achseinstellungen, das Verschleiß-, Rollwiderstands-, Aquaplaningverhalten usw.. Neben der Diagnosemöglichkeit (z.B. Achseinstellungen, Lagerdefekte usw.) können ausgewertete Druckschwankungen auch eine Aussage über mechanische Reifendefekte ermöglichen.

Zusätzlich lassen sich die ermittelten Werte, ggf. unter Berücksichtigung der über die Eingänge 30 dem Steuergerät 28 zugeführten Fahrzeuggeschwindigkeit und der augenblicklichen Motorleistung Fahrzeugregel- und Warnsystemen zuführen, beispielsweise einem Fahrstabilitätssystem oder einem Komfortsystem, das adaptive Hydrolager entsprechend dem Strassen- und Fahrzeugzustand einstellt.

Insgesamt eröffnet die Erfindung nicht nur die Möglichkeit, die statischen und dynamischen Beanspruchungen des Reifens zu erfassen, sein Verlustleistung zu ermitteln; die Funktionstüchtigkeit des Reifens zu überwachen und seine Lebensdauer zu prognostizieren, sondern auch die Möglichkeit, aus der Auswertung der erfassbaren detaillierten Reifendaten auf Fehler am Fahrzeug zu schließen und deren Zustand zu überwachen..

Fig. 7 stellt eine autarke Umdrehungsmesseinheit 52 dar, die in das Sensornetz 24 integriert werden kann oder eigenständig in den Reifen einvulkanisiert wird. Die Umdrehungsmesseinheit 52 enthält ein Sensorelement 54, das bei jeder Reifenumdrehung ein Signal abgibt. Das Sensorelement 54 kann beispielsweise ein Piezoelement enthalten, gegen das bei sich drehendem Reifen eine träge Masse mit schwankender Kraft drückt, so daß ein am Sensorelement 54 abgreifendes Spannungssignal schwankt. Das Ausgangssignal des Sensorelements 54 lässt sich zur Energieversorgung auswerten, welche Energie in einer Energieversorgungseinheit 56 entsprechend aufbereitet wird, und läßt sich weiter zur Erzeugung eines in die Umdrehungen des Reifens integrierenden Signals nutzen, indem jede durch eine Umdrehung bedingte Schwankung des Ausgangssignals des Sensorelements 54 einen Zählstand einer Speichereinheit 58 um Eins erhöht.

Mit der in dem Reifen integrierten autarken Umdrehungsmesseinheit 52 wird erreicht, daß der Reifen selbst ein Signal enthält, das unabhängig davon, an welchen Fahrzeugen der Reifen genutzt wurde, die Anzahl der Umdrehungen angibt, die der Reifen zurückgelegt hat. Der Zählstand der Speichereinheit 58 kann dazu in Werkstätten ausgelesen werden. Für Manipulationssicherheit ist ein Rücksetzen der Speichereinheit 58 nicht oder nur besonders autorisierten Stellen möglich.

Alternativ kann die Umdrehungsmeßeinhei in ein felgenfestes Ventil (z.B. Ventil 22 in Fig. 1) integriert werden.

Ähnlich wie die Umdrehungsmesseinheit 52 können auch die Sensoren 38 und/oder der Transponder 43 mit aus der Umdrehung des Reifens erzeugter Energie versorgt werden. Weiter können Speicherelemente vorgesehen sein, in denen bestimmte, für den Zustand des Reifens kritische Größen im Reifen selbst gespeichert sind, so dass eine Qualitätsüberwachung des Reifens, beispielsweise Flankenschädigung oder mechanische Überbeanspruchung am Reifen selbst durch Auslesen der entsprechenden Datenspeicher erkannt werden kann.

### BEZUGSZEICHENLISTE

- 4: Karkasse
- 6: Wulst
- 8: Kern
- 10: Gürtel
- 12: Gummischicht
- 14: Laufstreifen
- 16: Seitenwand
- 18: Schulter
- 20: Felge
- 22: Ventil
- 24: Sensornetz
- 26: Antenne
- 28: Steuergerät
- 30: Eingänge
- 31: Ausgänge
- 34: Datenleitung
- 36: Transponder
- 38: Sensoreinheit
- 40: Leitung
- 41: Fadennetz
- 42: Knoten
- 44: Temperaturmesselement
- 46: Druckmesselement
- 48: Dehnmesselement
- 50: Dehnmesselement
- 52: Umdrehungsmesseinheit
- 54: Sensorelement
- 56: Energieversorgungseinheit
- 58: Speichereinheit

## Patentansprüche

1. Auf einer Felge montierbarer Luftreifen, welcher Luftreifen innenseitig eine Mehrzahl von zumindest im Bereich der Lauffläche angebrachten Sensoreinheiten (38) zur Erfassung wenigstens eines Betriebsparameters des Reifens aufweist, welche Sensoreinheiten (38) zum Auslesen von von ihnen erfassten Messwerten geeignet sind,
**dadurch gekennzeichnet, dass**
die Sensoreinheiten (38) derart aufgebaut und im Bereich der Lauffläche in das Reifenmaterial derart eingebetet sind, dass sie wenigstens eine der im Bereich der Lauffläche innerhalb des Reifenmaterials vorhandenen Größen Temperatur, Druck oder Dehnung erfassen.

2. Luftreifen nach Anspruch 1, **dadurch gekennzeichnet, dass** wenigstens eine Sensoreinheit (38) zur Erfassung der Temperatur des Reifenmaterials im Bereich der Reifenschulter vorgesehen ist.

3. Luftreifen nach Anspruch 1 oder 2, **dadurch gekennzeichnet, dass** Sensoreinheiten (38) vorgesehen sind, mit denen wenigstens eine der erfassten Größen an von einander entfernten Stellen im Bereich der Lauffläche erfasst wird.

4. Luftreifen nach Anspruch 3, **dadurch gekennzeichnet, dass** die Sensoreinheiten (38) an einem Fadennetz (41) befestigt sind, das in den Reifen einvulkanisiert ist.

5. Luftreifen nach Anspruch 4, **dadurch gekennzeichnet, dass** die Fäden (40) des Netzes (41) elektrisch leitend sind und zum Anschluss der Sensoreinheiten (38) an eine Zentraleinheit (42, 43) dienen.

6. Luftreifen nach Anspruch 5, **dadurch gekennzeichnet, dass** das Netz (41) innenseitig über einem Gürtel (10) des Reifens angeordnet ist und der Gürtel eine Masseverbindung zwischen den Sensoreinheiten (38) und der Zentraleinheit (42, 43) bildet.

7. Luftreifen nach Anspruch 5 oder 6, **dadurch gekennzeichnet, dass** die Verbindung zwischen der Zentraleinheit (42, 43) und den Sensoreinheiten (38) derart ausgebildet ist, dass die Sensoreinheiten von der Zentraleinheit einzeln ansprechbar sind.

8. Luftreifen nach einem der Ansprüche 5 bis 7, **dadurch gekennzeichnet, dass** die Zentraleinheit (42, 43) einen Speicher enthält, in dem Messwerte der Sensoreinheiten (38) speicherbar sind.

9. Luftreifen nach einem der Ansprüche 5 bis 8, **dadurch gekennzeichnet, dass** die Zentraleinheit (42, 43) einen Transponder (43) enthält.

10. Luftreifen nach einem der Ansprüche 1 bis 9, **dadurch gekennzeichnet, dass** wenigstens eine der Sensoreinheiten (38) mit einem Transponder zu einer integrierten Funktionseinheit zusammengefasst ist.

11. Luftreifen nach einem der Ansprüche 1 bis 10, **gekennzeichnet durch** eine Umdrehungsmesseinheit (52), die die Umdrehung des Reifens erfasst und ein Speicherelement (58) zur Speicherung der Zahl der Umdrehungen, die der Reifen hinter sich hat, aufweist.

12. Luftreifen nach Anspruch 11, **dadurch gekennzeichnet, dass** ein Energieerzeugungselement (54) vorgesehen ist, das aus der Umdrehung des Reifens elektrische Energie erzeugt.

13. Fahrzeugüberwachungssystem, enthaltend einen Luftreifen nach einem der Ansprüche 1 bis 12, sowie ein Steuergerät (28) mit einer Ausleseeinheit zum Auslesen der von den Sensoren (38) gelieferten Daten, einer Auswerteeinheit, welche die Daten nach vorbestimmten Algorithmen auswertet, und einer Anzeigeeinheit, die aus den Daten ermittelte Zustände anzeigt.

## Claims

1. A pneumatic tyre which can be mounted on a rim and which on the inside has a plurality of sensor units (38) disposed at least in the region of the tread, for detecting at least one operating parameter of the tyre, which sensor units (38) are suitable for reading out measurement values detected by same,
**characterised in that**
the sensor units (38) are so constructed and are so embedded in the tyre material in the region of the tread that they detect at least one of the parameters present in the region of the tread within the tyre material consisting of temperature, pressure or stretch.

2. A pneumatic tyre according to claim 1 **characterised in that** there is provided at least one sensor unit (38) for detecting the temperature of the tyre material in the region of the shoulder of the tyre.

3. A pneumatic tyre according to claim 1 or claim 2 **characterised in that** there are provided sensor units (38), with which at least one of the detected parameters is detected at locations which are remote from each other in the region of the tread.

4. A pneumatic tyre according to claim 3 **characterised in that** the sensor units (38) are secured to a thread mesh (41) which is vulcanised into the tyre.

5. A pneumatic tyre according to claim 4 **characterised in that** the threads (40) of the mesh (41) are electrically conductive and serve to connect the sensor units (38) to a central unit (42, 43).

6. A pneumatic tyre according to claim 5 **characterised in that** the mesh (41) is arranged at the inside over a belt (10) of the tyre and the belt forms an earth connection between the sensor units (38) and the central unit (42, 43).

7. A pneumatic tyre according to claim 5 or claim 6 **characterised in that** the connection between the central unit (42, 43) and the sensor units (38) is such that the sensor units can be addressed individually by the central unit.

8. A pneumatic tyre according to one of claims 5 to 7 **characterised in that** the central unit (42, 43) includes a memory in which measurement values of the sensor units (38) can be stored.

9. A pneumatic tyre according to one of claims 5 to 8 **characterised in that** the central unit (42, 43) includes a transponder (43).

10. A pneumatic tyre according to one of claims 1 to 9 **characterised in that** at least one of the sensor units (38) is combined with a transponder to form an integrated functional unit.

11. A pneumatic tyre according to one of claims 1 to 10 **characterised by** a rotation measuring unit (52) which detects the rotation of the tyre and has a memory unit (58) for storing the number of revolutions which the tyre has behind it.

12. A pneumatic tyre according to claim 11 **characterised in that** there is provided an energy producing element (54) which produces electrical energy from the rotation of the tyre.

13. A vehicle monitoring system including a pneumatic tyre according to one of claims 1 to 12 and a control device (28) with a reading-out unit for reading out the data supplied by the sensors (38), an evaluation unit which evaluates the data in accordance with predetermined algorithms, and a display unit which displays conditions ascertained from the data.

## Revendications

1. Pneumatique à monter sur une jante, ledit pneumatique comprenant du côté intérieur une pluralité d'unités capteurs (38) agencées au moins dans la zone de la bande de roulement pour détecter au moins un paramètre de fonctionnement du pneumatique, lesdits unités capteurs (38) étant appropriées pour la lecture de valeurs de mesure qu'elles détectent,
**caractérisé en ce que**
les unités capteurs (38) sont ainsi conçues et sont noyées dans le matériau du pneumatique dans la zone de la bande de roulement de telle sorte qu'elles détectent au moins l'une des grandeurs présentes dans la zone de la bande de roulement à l'intérieur du matériau du pneumatique, que sont la température, la pression ou la dilatation.

2. Pneumatique selon la revendication 1, **caractérisé en ce qu'**il est prévu au moins une unité capteur (38) pour détecter la température du matériau de pneumatique dans la zone de l'épaulement du pneumatique.

3. Pneumatique selon l'une ou l'autre des revendications 1 et 2, **caractérisé en ce qu'**il est prévu les unités capteurs (38) au moyen desquelles est détectée au moins l'une des grandeurs détectées à des emplacements éloignés l'un de l'autre dans la zone de la bande de roulement.

4. Pneumatique selon la revendication 3, **caractérisé en ce que** les unités capteurs (38) sont fixées sur un réseau de fil (41) qui est intégré par vulcanisation dans le pneumatique.

5. Pneumatique selon la revendication 4, **caractérisé en ce que** les fils (40) du réseau (41) sont électriquement conducteurs et servent à brancher les unités capteurs (38) à une unité centrale (42, 43).

6. Pneumatique selon la revendication 5, **caractérisé en ce que** le réseau (41) est agencé du côté intérieur par-dessus une ceinture (10) du pneumatique et **en ce que** la ceinture forme une connexion de masse entre les unités capteurs (38) et l'unité centrale (42, 43).

7. Pneumatique selon l'une ou l'autre des revendications 5 et 6, **caractérisé en ce que** la connexion entre l'unité centrale (42, 43) et les unités capteurs (38) est réalisée de telle sorte que les unités capteurs peuvent être interrogées individuellement par l'unité centrale.

8. Pneumatique selon l'une des revendications 5 à 7, **caractérisé en ce que** l'unité centrale (42, 43) comprend une mémoire dans laquelle peuvent être mémorisées des valeurs de mesure des unités capteurs (38).

9. Pneumatique selon l'une des revendications 5 à 8, **caractérisé en ce que** l'unité centrale (42, 43) comprend un transpondeur (43).

10. Pneumatique selon l'une des revendications 1 à 9, **caractérisé en ce que** l'une au moins des unités capteurs (38) est réunie avec un transpondeur pour former une unité fonctionnelle intégrée.

11. Pneumatique selon l'une des revendications 1 à 10, **caractérisé par** une unité de mesure de rotation (52) qui détecte la rotation du pneumatique et qui comprend un élément de mémorisation (58) pour mémoriser le nombre de rotations que le pneumatique a parcouru.

12. Pneumatique selon la revendication 11, **caractérisé en ce qu'**il est prévu un élément générateur d'énergie (54) qui génère de l'énergie électrique à partir de la rotation du pneumatique.

13. Système de surveillance de véhicule, comportant un pneumatique selon l'une des revendications 1 à 12, ainsi qu'un appareil de commande (28) avec une unité d'extraction pour la lecture des données fournies par les capteurs (38), une unité d'évaluation qui évalue les données suivant des algorithmes prédéterminés, et une unité d'affichage qui affiche des états déterminés à partir des données.
